(19) **Europäisches Patentamt / European Patent Office / Office européen des brevets**

(11) **EP 3 502 880 B1**

(12) **EUROPEAN PATENT SPECIFICATION**

(45) Date of publication and mention
of the grant of the patent:
**03.08.2022 Bulletin 2022/31**

(51) International Patent Classification (IPC):
**G06F 9/445** (2018.01)    **G06N 5/00** (2006.01)
**G06N 20/00** (2019.01)

(21) Application number: **18204900.7**

(22) Date of filing: **07.11.2018**

(52) Cooperative Patent Classification (CPC):
**G06F 9/445; G06N 5/003; G06N 20/00**

(54) **METHOD FOR PRELOADING APPLICATION, STORAGE MEDIUM, AND TERMINAL DEVICE**

VERFAHREN ZUM VORLADEN EINER ANWENDUNG, SPEICHERMEDIUM UND ENDGERÄTEVORRICHTUNG

PROCÉDÉ DE PRÉCHARGEMENT D'APPLICATION, SUPPORT D'INFORMATIONS ET DISPOSITIF TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2017 CN 201711387761**

(43) Date of publication of application:
**26.06.2019 Bulletin 2019/26**

(73) Proprietor: **GUANGDONG OPPO MOBILE
TELECOMMUNICATIONS
CORP., LTD.
Wusha, Chang'an
Dongguan,
Guangdong 523860 (CN)**

(72) Inventors:
• **CHEN, Yan**
  **Dongguan, Guangdong 523860 (CN)**
• **LIU, Yaoyong**
  **Dongguan, Guangdong 523860 (CN)**

(74) Representative: **Manitz Finsterwald
Patent- und Rechtsanwaltspartnerschaft mbB
Martin-Greif-Strasse 1
80336 München (DE)**

(56) References cited:
**US-A1- 2013 173 513    US-A1- 2014 366 041
US-A1- 2014 373 032**

• **TINGXIN YAN ET AL: "Fast app launching for
mobile devices using predictive user context",
MOBISYS 2012: 10TH INTERNATIONAL
CONFERENCE ON MOBILE SYSTEMS,
APPLICATIONS AND SERVICES, 25 June 2012
(2012-06-25), page 113, XP055106616, DOI:
10.1145/2307636.2307648 ISBN:
978-1-45-031301-8**

## Description

TECHNICAL FIELD

The disclosure relates to the field of computer technology, and more particularly to a method and an apparatus for preloading an application, a storage medium, and a terminal device.

BACKGROUND

At present, with rapid development of mobile terminal technologies, smart devices such as smart phones, tablet computers, smart TVs, and the like, have become indispensable electronic devices in people's lives.

Various applications (application software, APP) are installed on the mobile terminal. Generally, the loading of an application begins only when a user initiates an application. However, the storage space occupied by the application is getting larger and larger, and the loading time is also getting longer and longer, which wastes a lot of precious time of the user to wait the loading of the application. In order to make the application run more smoothly, some mobile terminals will prepare loading resources of some applications in advance, that is, preload some applications in advance.

However, the applications cannot be arbitrarily preloaded, because if too many resources are preloaded, it will occupy much storage space, and the power consumption will become larger, which will seriously affect the fluency of the use of the terminal. Therefore, how to optimize the preloading mechanism and reduce the power consumption of the terminal becomes critical.

US2013173513A1 discloses automatically performing device actions comprising: obtaining one or more contextual values from one or more contextors; deciding, using a decision engine comprising one or more decision rules, whether to perform an action on a computing device based on the one or more contextual values and the one or more decision rules; performing the action on the computing device in an instance when the decision engine decides that the action is to be performed; and updating the decision rules of the decision engine using feedback related to the action.

SUMMARY

Embodiments of the disclosure provide a method for preloading an application, a storage medium, and a terminal device.

The present invention is defined according to the independent claims. Specific embodiments are defined in the dependent claims.

According to the method for preloading the application provided in the embodiments of the disclosure, the current state feature information of the terminal device is acquired, when an application preloading prediction event is detected to be triggered. The current state feature information is respectively input into a plurality of decision tree prediction models each corresponding to an application in a preset application set. Each of the decision tree prediction models is generated based on the usage regularity of an associated applications corresponding to the historical state feature information of the terminal device. A target application to be initiated is predicted according to the output results of the decision tree prediction models, and then the target application is preloaded. By adopting the above technical solution, the terminal device can predict the application to be initiated according to the current usage state of the terminal device and the decision tree prediction models, where the decision tree prediction models are generated based on the states recorded during historical usage and the usage regularities of the associated applications, and then the application predicted is preloaded. In this way, the application to be initiated can be accurately predicted, and the initiation speed of the application can be improved under a precondition of saving storage space.

BRIEF DESCRIPTION OF THE DRAWINGS

To describe technical solutions in the embodiments of the disclosure or of the related art more clearly, the following briefly introduces the accompanying drawings required for describing the embodiments of the disclosure. Apparently, the accompanying drawings in the following description illustrate some embodiments of the disclosure. Those skilled in the art may also obtain other drawings based on these accompanying drawings without creative efforts.

FIG. 1 is a schematic flowchart of a method for preloading an application according to an embodiment of the disclosure.

FIG. 2 is a schematic flowchart of another method for preloading an application according to an embodiment of the disclosure.

FIG. 3 is a schematic flowchart of yet another method for preloading an application according to an embodiment of the disclosure.

FIG. 4 is a structural block diagram illustrating an apparatus for preloading an application according to an embodiment of the disclosure.

FIG. 5 is a schematic structural diagram illustrating a terminal device according to an embodiment of the disclosure.

FIG. 6 is a schematic structural diagram illustrating another terminal device according to an embodiment of the disclosure.

DETAILED DESCRIPTION

Technical solutions of the disclosure will be further described below with reference to the accompanying drawings and specific embodiments. It is understood that the specific embodiments described herein are merely used to explain the disclosure, rather than limiting the disclosure. In addition, it should be noted that, for convenience of description, only part rather than all of the structures related to the disclosure are illustrated in the accompanying drawings. In the present disclosure, it is to be noted that embodiments that are not covered by the appended set of claims are not part of the present invention, and technical features that are presented in the independent claims are essential in the present invention.

Before discussing the exemplary embodiments in more detail, it should be noted that some exemplary embodiments are described as a process or a method depicted as a flowchart. Although the flowcharts describe the various steps as a sequential process, many of the steps can be implemented in parallel, concurrently, or simultaneously. In addition, the order of the steps can be rearranged. The process may be terminated when its operation is completed, but may also have additional steps not included in the accompanying drawings. The processing may correspond to methods, functions, procedures, subroutines, subprograms, and the like.

On a terminal device, preloading applications is an effective way to improve user experience. By preparing loading resources of some applications in advance, the applications can be caused to run more smoothly. In related arts, the applications are preloaded mainly based on statistical methods. For example, there may be only a few applications that are most commonly used by user, and all of them are preloaded. However, there are usually a lot of applications installed in the terminal device. The less commonly used applications do not mean that the user will not use them in the next moment, and the commonly used ones do not mean that the user will use them immediately. Therefore, the existing preloading methods lead to insufficient prediction accuracy of the preloading of the applications, and too many resources are needed to be preload, which wastes a lot of storage space and affects the overall performance of the terminal device.

According to embodiments of the disclosure, a method for preloading an application is provided. The method includes: acquiring current state feature information of the terminal device, when an application preloading prediction event is detected to be triggered; inputting the current state feature information into a plurality of decision tree prediction models each corresponding to an application in a preset application set, where each of the decision tree prediction models is generated based on a usage regularity of an associated application corresponding to historical state feature information of the terminal device; predicting a target application to be initiated according to output results of the decision tree prediction models; and preloading the target application.

According to embodiments of the disclosure, an apparatus for preloading an application is provided. The apparatus includes a state acquiring module, a feature information inputting module, a predicting module, and a preloading module. The state acquiring module is configured to acquire current state feature information of a terminal device, when an application preloading prediction event is detected to be triggered. The feature information inputting module is configured to input the current state feature information into a plurality of decision tree prediction models each corresponding to an application in a preset application set, where each of the decision tree prediction models is generated based on a usage regularity of an associated application corresponding to historical state feature information of the terminal device. The predicting module is configured to predict a target application to be initiated according to output results of the decision tree prediction models. The preloading module is configured to preload the target application.

According to embodiments of the disclosure, a terminal device is provided. The terminal device includes at least one processor and a computer readable storage coupled to the at least one processor. The computer readable storage stores at least one computer executable instruction thereon, which when executed by the at least one processor, cause the at least one processor to carry out the following actions. Current state feature information of the terminal device is acquired, when an application preloading prediction event is detected to be triggered. The current state feature information is input into a plurality of decision tree prediction models each corresponding to an application in a preset application set, where each of the decision tree prediction models is generated based on a usage regularity of an associated application corresponding to historical state feature information of the terminal device. A target application to be initiated is predicted according to output results of the decision tree prediction models, and then the target application is preloaded.

According to embodiments of the disclosure, a non-transitory computer readable storage medium is provided. The non-transitory computer readable storage medium is configured to store computer programs which, when executed by a processor, cause the processor to carry out following actions. Current state feature information of a terminal device is acquired, when an application preloading prediction event is detected to be triggered. The current state feature information is input into a plurality of decision tree prediction models each corresponding to an application in a preset application set, where each of the decision tree prediction models is generated based on a usage regularity of an associated application corresponding to historical state feature information of the terminal device. A target application to be initiated is predicted according to output results of the decision tree prediction models, and then the target application is preloaded.

The embodiments of the disclosure will be detailed below with reference to the accompanying drawings.

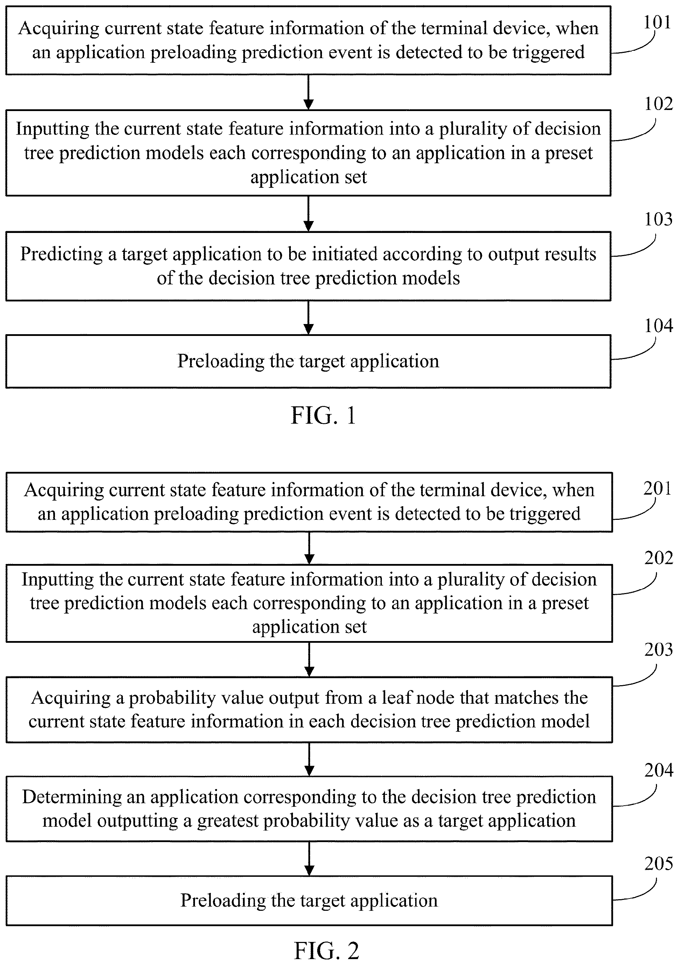

FIG. 1 is a schematic flowchart of a method for preloading an application according to an embodiment of the disclosure. The method can be performed by an apparatus for preloading an application. The apparatus may be implemented by software and/or hardware, and generally integrated in a terminal device. As illustrated in FIG. 1, the method begins at block 101.

At block 101, current state feature information of the terminal device is acquired, when an application preloading prediction event is detected to be triggered.

In an exemplary embodiment, the terminal device of the disclosure may include mobile devices such as a smart phone, a tablet computer, a notebook computer, and the like.

In the embodiments of the disclosure, the trigger conditions of the application preloading prediction event are not limited herein. In an exemplary embodiment, the trigger conditions may be at least one of the following that: the terminal device is detected to be powered on, a screen of the terminal device is detected to be lit up, and the terminal device is detected to be successfully unlocked. The trigger conditions may also be the following that: a certain application or a preset application is detected to be in use by the user. The trigger conditions may also be the following that: an accumulated usage duration of a current application (or a current preset application) by the user is detected to reach a predetermined usage duration threshold. The trigger conditions may also be the following that: the terminal device is detected to be in a preset using state, such as being held by the user, or being picked up by the user.

In the embodiment, the current state feature information of the terminal device, which is acquired when the application preloading prediction event is detected to be triggered, is input into the decision tree prediction models each corresponding to an associated application in subsequent operations. Each of the decision tree prediction models is generated based on a usage regularity of an associated application corresponding to historical state feature information of the terminal device. The decision tree prediction model is configured to predict possibility of the associated application becoming a next application to be used by the user.

In an exemplary embodiment, the state feature information in the disclosure may include time information, and may further include a switching state of a mobile data network or a connection state of a wireless hotspot.

Taking the time information as an example, for the terminal device, the user's requirements on applications may be different at different moments or time periods, and thus the time information can be taken as a feature (or an attribute) of the state feature information. As an implementation, the time information may be a current system time of the terminal device or a time period to which the current system time belongs. The time period may be a certain day (such as Monday or Sunday) of a week, or may be a certain time period of one day (such as 6 am to 8 am). Different moments or different time periods may indicate that the user is in different active states. For example, during working days from Monday to Friday, the user is generally in working states, and office or social applications are generally used by the user. Saturday, Sunday and statutory holidays are rest days, the user is generally in casual states, and game or leisure applications are generally used by the user. For workdays, such as from 6 am to 8 am, the user is generally on the way to work, and may use a news client to browse news; from 9 am to 11 am, the user is generally in offices, and may use a mailbox client; from 12 am to 1 pm, the user may use take-out applications to order meals; and from 6 pm to 6:10 pm which is a time period to get off work, the user may use taxi applications to book a car, and so on. In addition, the schedule information of the user may be acquired, and the time information may be corrected according to the schedule information. For example, on a certain Monday, if the schedule information indicates that the user is on vacation, the corresponding workday may be corrected to a rest day.

In order to improve the accuracy of a prediction result, more state parameters of the terminal device may be considered in the embodiments of the disclosure. At present, Internet technology is developing rapidly, and the implementations of many functions of applications in terminal devices rely on the network, such as mobile payment, browsing the web, watching videos online, and chatting via social software. The network here can be a mobile data network (also known as a cellular mobile network) provided by a network operator (for example, the network operator in China includes China Mobile®, China Unicom®, China Telecom®, etc.), and can also be a wireless local area network based on wireless local area network technology, such as wireless fidelity (WiFi) technology. The wireless local area network has an ability to access the Internet, and the terminal device can access the Internet by connecting to a wireless hotspot in the wireless local area network. The user needs to pay a certain data traffic fee to the network operator to use the mobile data network. Therefore, when there is an available wireless hotspot (such as a WiFi hotspot) around the user, the user generally prefers to connect to the wireless hotspot to access the Internet. In addition, in order to prevent certain applications in the terminal device from consuming data traffic without the user's knowledge, many user also choose to turn off the mobile data network. In addition, in terminal devices, different applications require different networking functions, and the data traffic consumed during usage is also different. Taking the above consideration, in the embodiments of the disclosure, at least one of the switching state of the mobile data network and the connection state of the wireless hotspot may be used as features of the state feature information to enhance the accuracy of predicting the application to be loaded. When the switching state of the mobile data network is "on", it may indicate that there is probably no wireless hotspot in current environment, the user may choose to use an application with less data traffic consumption. When the switching state of the mobile data network is "off', the user may choose to use an application that does not need to rely on the network or use any application by connecting to a WiFi hotspot. When the connection status of the wireless hotspot is a "connected" status, the user may use any application. When the connection status of the wireless hotspot is a "disconnected" status, the user may use an application with less data traffic consumption.

The embodiments of the disclosure can combine the time information, the switching state of the mobile data network, and/or the connection status of the wireless hotspot, and the states of the terminal device can be divided into much more types, thereby more accurately predicting the application to be initiated. Of course, much more features may be included in the state feature information, which are not limited in the disclosure.

At block 102, the current state feature information is input into a plurality of decision tree prediction models each corresponding to an application in a preset application set.

Each of the decision tree prediction models is generated based on a usage regularity of an associated application corresponding to the historical state feature information of the terminal device. A decision tree is a tree-like decision graph with attached probability results, which is an intuitive diagram using statistical probability analysis. In machine learning, the decision tree is a prediction model, which represents a mapping between object attributes and object values. Each node in the tree represents a judgment condition of the object attribute, the branch of the tree represents an object that meets the condition of the node, and the leaf node of the tree represents a predicted result to which the object belongs. The decision tree prediction model in the disclosure may be a decision tree model built based on any algorithm, such as ID3 algorithm, Classification and Regression Tree (CART) algorithm, C4.5 algorithm, Random Forest, and so on, which are not limited in the disclosure. For convenience of description, the disclosure will take the ID3 algorithm as an example for subsequent description.

In an exemplary embodiment, during the using of the terminal device by the user, the historical state feature information of the terminal device may be collected according to a preset sampling policy, and usage regularity data of the application in the terminal device is recorded for each historical state feature information, so as to obtain samples and corresponding sample labels based on the history usage of the user. After a time period of data collection, when the user's usage habits can be reflected by the collected samples in terms of time span and quantity, the decision tree prediction models corresponding to different applications can be built according to the collected and recorded data, which are configured to predict which application or applications a user might use in a current state.

In an exemplary embodiment, the preset application set may include all or part of applications installed in the terminal device. The part of the applications may not include system applications or applications that are rarely used by users. The determining manner and the amount of the applications included in the preset application set are not limited in the disclosure. As an implementation, the preset application set may be determined according to at least one of the usage count and the usage duration of each application in a predetermined time period (for example, 1 month) before the current time. When the usage count and/or the usage duration exceeds a corresponding threshold, the associated application is added into the preset application set, or the applications are sorted according to their usage counts and/or their usage duration, and the top-ranked applications are added into the preset application set.

As an implementation, the process of building the decision tree prediction models may be performed by a server or by the terminal device. When the process is performed by the server, the server may send a sampling instruction to the terminal device according to a sampling plan, and the terminal device uploads corresponding data to the server according to the sample sampling instruction. Then the server builds the decision tree prediction models, and returns the models to the terminal device, which can reduce the calculation amount of the terminal device. When the process is performed by the terminal device itself, the terminal device may not establish any connection with the server, that is, a network access function is not required in the terminal device, and the timeliness and accuracy of the sample collection can be ensured, thereby ensuring that the built decision tree prediction models are more in line with the user's recent usage habits.

In the embodiment, the current state feature information obtained of the terminal device is sequentially input into the decision tree prediction models each corresponding to an application in the preset application set, and then a probability that each application becomes the next application used by the user can be obtained.

At block 103, a target application to be initiated is predicted according to output results of the decision tree prediction models.

In an exemplary embodiment, each decision tree prediction model corresponding to an application in the preset application set will output a probability value, and the probability that the corresponding application becomes a next application used by the user is determined according to the probability value. One or more applications corresponding to the greatest or greater probability values are determined to be the target applications. For example, in a case that the probability value corresponding to an application A is 0.5, the probability value corresponding to an application B is 0.3, and the probability value corresponding to an application C is 0.05, the application A can be determined to be the target application, or both of the applications A and B can be determined to be the target applications.

At block 104, the target application is preloaded.

In the embodiments of the disclosure, a specific process of the preloading and loaded data resources is not limited. For example, corresponding hardware resources may be assigned for the target application, and relevant data required for the initiation is loaded based on the assigned hardware resources. In addition, the loaded data resources can be determined according to a specific type of the target application. For example, if the target application is a social software, a splash screen, a contact list, and recent message records in the application can be preloaded. If the target application is a game software, game background related data and the like in the application can be preloaded.

After the target application is preloaded, if the user really wants to use the target application, then initiation of the target application (such as clicking an application icon corresponding to the target application) will be triggered. At this time, since all or part of the resources used for the initiation have been preloaded, the initiation speed of the target application will be significantly increased, which can reduce the user's waiting time.

It should be understood that, if the target application is already in a running state, it is no need to preload the target application, and a new un-initiated target application can be re-determined. In addition, the applications that are currently running can also be excluded from the preset application set, that is, the currently running applications are not included in the preset application set, in order to reduce the amount of calculation and improve the prediction efficiency.

According to the method for preloading the application provided in the embodiments of the disclosure, the current state feature information of the terminal device is acquired, when an application preloading prediction event is detected to be triggered. The current state feature information is respectively input into a plurality of decision tree prediction models each corresponding to an application in a preset application set. Each of the decision tree prediction models is generated based on the usage regularity of an associated applications corresponding to the historical state feature information of the terminal device. A target application to be initiated is predicted according to the output results of the decision tree prediction models, and then the target application is preloaded. By adopting the above technical solution, the terminal device can predict the application to be initiated according to the current usage state of the terminal device and the decision tree prediction models, where the decision tree prediction models are generated based on the states recorded during historical usage and the usage regularities of the associated applications, and then the application predicted is preloaded. In this way, the application to be initiated can be accurately predicted, and the initiation speed of the application can be improved under a precondition of saving storage space.

In some embodiments, the action that the current state feature information of the terminal device is acquired, when the application preloading prediction event is detected to be triggered, may be specifically implemented as follows. Storage space information of the terminal device is acquired, when the application preloading prediction event is detected to be triggered. Whether a remaining storage space reaches a preset storage threshold is determined according to the storage space information. When the remaining storage space reaches the preset storage threshold, the current state feature information of the terminal device is acquired. The advantage of such a setting is that when the storage space of the terminal device is insufficient, the preloading operations of the applications may be omitted, to save system resources.

In some embodiments, the state feature information may further include at least one of a date category, identity information of a connected wireless hotspot, currently running applications, a previous foreground application, a duration of a current application staying in the background, plugging and unplugging states of an earphone jack, a charging state, power information of a battery, a display duration of a screen, motion state and location information of the terminal device. The advantage of such a setting is that the dimensions and the hierarchies of the divided state of the terminal device can be further enriched, thereby more accurately predicting the application to be initiated.

In an exemplary embodiment, the date category may include a working day and a rest day, and the rest day may include a weekend, a legal holiday, or a holiday in the schedule information. In different types of dates, users may generally do different things, and use different applications, so the date category can also be taken as a feature of the state feature information.

When the terminal device is connected to the wireless hotspot, the identity information of the connected wireless hotspot may be further acquired. The identity information may be an identity identifier. Take WiFi as an example, the identity information may be a service set identifier (SSID) or a basic service set identifier (BSSID). The terminal device may connect to different wireless hotspots, which may indicate that the user is in different environments, such as at home, in the office, or in a public area. In addition, different wireless hotspots may include public hotspots and personal hotspots, as well as encrypted hotspots and unencrypted hotspots. Due to considerations such as usage occasion and security, the user may use different applications, so the identity information of the connected wireless hotspot can be taken as a feature of the state feature information.

During the process of using the terminal device, the initiation sequences of two or more applications may be related. For example, when the user uses application A1, she or he then may also use another application such as application A2, application A3, or the like to perform operations such as price comparison of the products. Therefore, the currently running application may have an impact on the applications to be initiated next. The currently running applications may include a foreground running application and/or background running applications. In the embodiments of the disclosure, the currently running application can be taken as a feature of the state feature information.

As described above, the initiation sequences of two or more applications may be related. A previous foreground application (an application running in foreground) may also affect an application to be initiated. Therefore, in embodiments of the disclosure, the previous foreground application can also be taken as a feature of the state feature information.

The duration of an application staying in the background can also reflect the user's usage requirements for the application to a certain extent. The stay duration may be the most recent stay duration before a current state feature collection moment. The duration of the current application staying in the background, the current application may specifically be the current application targeted during a sample collection process. As an example, for an application A, assume that application A is initiated at 9:10 and is switched to the background at 9:15, and the current sampling time point is at 9:30. If the application A keeps running in the background before 9:30, the duration of application A staying in the background is 15 minutes. If application A is closed at 9:20, the duration of staying in the background is 5 minutes. In addition, for the same sampling time point, the duration that different applications have stayed in the background may also affect which application is the next application to be initiated by the user. Therefore, in the embodiment of the disclosure, for application A and the current sampling time point, the duration of each application staying in the background can also be used as a feature in the state feature information. In addition, for the current application targeted during the sample collection process, the time when it was last switched to the background may also affect whether it will be initiated at the current time. Therefore, the last initiated time of the current application can also be taken as a feature of the state feature information.

A headphone jack is usually provided on the terminal device, and the user can choose whether to listen to the sound of the terminal device through an earphone according to the needs of the usage environment or listening experience. Generally, if the plugging and unplugging status of the headphone jack is a "plugging" status, it may indicate that the multimedia player-type applications are to be initiated. If the plugging and unplugging status of the headphone jack is a "unplugging" status, it may indicate that the user is in an environment such as a public place, and the user generally may not use the multimedia player-type applications, but choose some applications that play less sound. In consideration of the above factors, the plugging and unplugging status of the headphone jack can be taken as a feature of the state feature information.

Mobile attribute of the terminal device determine that the terminal device needs to be powered by a battery. When the charging state of the terminal device is charging, it may have a certain impact on the use of the terminal device. The user generally may avoid using the terminal device in this case, so the applications initiated at this time are generally the applications with higher demand. When the charging state of the terminal device is not-charging, the applications initiated may be unrestricted. Therefore, the charging state can be taken as a feature of the state feature information. The charging state may include charging and not-charging. When charging, the charging state may further include a charging mode, where the charging mode may include a fast charging mode and a normal charging mode. The fast charging mode may indicate that the terminal device is charged through a fast charging power adapter (such as a mobile power source). The normal charging mode may indicate that the terminal device is charged through a normal power adapter (such as an original charger of the terminal device).

When the power of the terminal device is insufficient, in order to extend standby time, the user generally may not initiate an application that consumes a large amount of power, such as a video player. When the power of the terminal device is sufficient, applications to be initiated may be unrestricted. Therefore, power information of a battery can be taken as a feature of the state feature information.

The display duration of the screen may refer to the duration that the terminal device remains displayed after being lit up, which may be used to indicate cumulative duration of continuous usage of the terminal device. After different usage cumulative duration, the next application that the user may choose to use may also be different. For example, when the screen has displayed for an hour, the user may need to rest their eyes and the music player may be turned on. In the embodiments of the disclosure, the display duration of the screen can be taken as a feature of the state feature information.

The motion state of the terminal device can reflect a usage scenario of the terminal device to a certain extent. Usage requirements for application may also be different under different motion states, such as a running scene, a driving scene, a walking scene, or a stationary state. For example, the users may need to use a music player to listen to songs while running, and may need to use a navigation app to navigate while driving. In addition, the stationary states may further include a posture of the terminal device, such as a tilt angle, etc., which can reflect the state when the user uses the terminal device, such as using on a desktop, using in bed, and the like. In the embodiments of the disclosure, the motion state of the terminal device can be taken as a feature of the state feature information

The location information of the terminal device can reflect usage environment of the terminal device to a certain extent, for example, indoors or outdoors, in the office or at home, in a shopping mall, a theater or a tourist attraction, and so on. The user may also choose to use different applications at different locations. In the embodiments of the disclosure, the location information of the terminal device may be taken as a feature of the state feature information.

It should be noted that, in order to indicate that the different values of any one of the features may make different effects on the prediction results, each of the above features in the state feature information is described by examples. However, the above examples do not limit the embodiments of the disclosure. The larger the amount of the features in the state feature information is, the more accurate the general prediction result is. The feature may be selected according to actual conditions, and the features are not limited to the above-listed features.

In some embodiments, the information of the state feature information is a real number. For example, the information can be a normalized real number, that is, the values of the features in the sample may be normalized to obtain a normalized real number, such as normalized to a real number between 0 and 1. The advantage of such a setting is that it facilitates the comparison of feature values and related calculations, which reduces the amount of computation. For example, the value corresponding to each feature can be converted into a corresponding serial number, such as the WiFiSSID "abed" converted into NO. 1, the WiFi SSID "xyz" converted into NO. 2, and the like, and then a normalization processing is performed. The serial numbers of different features may be different, or may be multiplexed (for example, the numbers corresponding to the charging state and the power information of the battery may be NO. 1), because different features are located in different positions in the sample.

In some embodiments, the related operations of building the decision tree prediction models may be performed by the terminal device. In an exemplary embodiment, before an detection of whether the application preloading prediction event is triggered, the method further includes the follows. Samples for each application in the preset application set are collected in a preset sampling period, and a plurality of decision tree prediction models each corresponding to an application in the preset application set are respectively built. The advantage of such a setting is that the terminal device may not establish any connection with the server, that is, a network access function is not required in the terminal device, and the timeliness and accuracy of the sample collection can be ensured, thereby ensuring that the built decision tree prediction model is more in line with the user's recent usage habits. The preset sampling period can indicate the duration of continuous sample collection, and the sample collection is performed at a predetermined sampling frequency within a preset sampling period. The preset sampling period may be determined according to conditions such as the characteristics of the terminal device, the user's usage needs, etc., which are not limited in the disclosure. For example, since most users use smart phones almost every day, a short preset sampling period can be set, such as half a month. If a usage frequency is relatively high (such as a long time per day), a much shorter preset sampling period can be set, such as a week. The sampling frequency is not limited in the embodiment of the disclosure. For example, it can be determined based on how often or frequently the user uses the application.

As an implementation, the action of collecting samples for each application in the preset application set in a preset sampling period, and respectively building the plurality of decision tree prediction models each corresponding to an application in the preset application set may include the follows. Real-time state feature information of the terminal device is acquired, for each application in the preset application set, at a sampling time point in the preset sampling period, and the real-time state feature information is taken as a sample of a current application. Whether the current application is used within a predetermined time period after the sampling time point is monitored, and a monitoring result is recorded as a sample label of the current sample. The decision tree prediction model corresponding to the current application is built according to the samples collected in the preset sampling period and the corresponding sample labels. The use of the application may include the usage scenarios such as the initiation of the applications, the application being switched from running in the background to running in the foreground, and so on In an exemplary embodiment, if the current application is initiated within a predetermined time period starting from the each sampling time point, the sample label may be recorded as "1", if the current application is not initiated, the sample label may be recorded as "0", so as to facilitate subsequent model building. The length of the predetermined time period may be determined according to manners such as a simulation, an experiment, and so on, which are not limited in the embodiments of the disclosure. For example, the length may be 5 minutes.

In some embodiments, the action that a target application to be initiated is predicted according to output results of the decision tree prediction models, is specifically implemented as follows. A probability value output from a leaf node that matches the current state feature information in each decision tree prediction model, is acquired. N probability values having the greatest values are selected from the acquired probability values. Applications corresponding to the selected N probability values are determined as the target applications to be initiated. In the embodiment, N is a positive integer greater than or equal to one. The action of N probability values having the greatest values are selected from the acquired probability values may be implemented as follows. All the acquired probability values are sorted in a descending order, and the top N probability values are selected. For the ID3 decision tree in the embodiment of the disclosure, only one leaf node in each tree matches the current state feature information. At the only one leaf node, a corresponding output probability value can be obtained, and the larger the probability value is, the higher the probability that the corresponding application will be used immediately by the user is, that is, the higher the probability that the corresponding application will be initiated immediately is. Therefore, the applications corresponding to the higher probability values can be determined as the target applications, and the preloading operation can be performed on the applications being as the target application.

Further, the method may further include the follows. Storage space information of the terminal device is acquired, the value of N is determined according to the storage space information. The advantage of such a setting is that the number of the preloaded applications can be determined according to the size of the currently remaining storage space of the terminal device. When the terminal device has larger remaining storage space, multiple applications can be preloaded to increase the hit rate of the prediction results. When the terminal device has less remaining storage space, one application can be preloaded to save the storage space and ensure the smooth running of the terminal device as a whole. The correspondence between the size of the remaining storage space and N can be set in advance and stored in the terminal device.

In some embodiments, the sample collection process can be performed in parallel with the application preloading prediction process, and the stale samples in a sample set can be deleted periodically, leaving only the samples collected in the most recent preset sampling period, to reflect the user's latest usage habits, as well as reduce the computation amount of the prediction operation, and save storage space occupied by the sample set.

FIG. 2 is a schematic flowchart of another method for preloading an application according to an embodiment of the disclosure. The method begins at block 201.

At block 201, current state feature information of the terminal device is acquired, when an application preloading prediction event is detected to be triggered.

In an exemplary embodiment, the current state feature information may include at least one of time information, a date category, a switching state of a mobile data network, a connection state of a wireless hotspot, identity information of a connected wireless hotspot, currently running applications, a previous foreground application, a duration of a current application staying in the background, a time point at which the current application was last switched to the background, plugging and unplugging states of an earphone jack, a charging state, power information of a battery, a display duration of a screen, motion state and location information of the terminal device.

At block 202, the current state feature information is input into a plurality of decision tree prediction models each corresponding to an application in a preset application set.

In the embodiment, the decision tree prediction models can be built by the follows. For each application in the preset application set, real-time state feature information of the terminal device is acquired at a sampling time point in the preset sampling period, and the real-time state feature information is taken as a sample of a current application. Whether the current application is used within a predetermined time period after the sampling time point is monitored, and a monitoring result is recorded as a sample label of the current sample. The decision tree prediction model corresponding to the current application is built according to the samples collected in the preset sampling period and the corresponding sample labels.

Taking the decision tree prediction model based on ID3 algorithm as an example, the decision tree prediction model is described in detail below.

The preset sampling period can be 2 weeks, and the predetermined time period may be within 5 minutes from the sampling time point. Taking an application A in the preset application set as an example, the building process of the decision tree prediction model corresponding to the application A is introduced below. It should be understood that, the sample collection period corresponding to each application in the preset application set and the process of building the decision tree prediction models may be the same or similar, which will not be described one by one herein.

For each application in the preset application set, the real-time state feature information of the terminal device at each sampling time point is collected as a sample of the current application at a preset sampling frequency (eg, once every 10 minutes) within 2 weeks. At each sampling time point, whether the current application is used by the user in the next 5 minutes is monitored. If the current application is used, a corresponding sample label is recorded as "1", and if the current application is not used, the corresponding sample label is recorded as "0". The sample and the corresponding sample label can be recorded as $(x_1, x_2, ..., x_n, y)$, where the sample label is y, the features of the sample can be recorded as X, and each feature of the sample is recorded as $x_i$.

After 2 weeks of sample collection, the user's usage habits can be sufficiently reflected by the collected samples in terms of time span and quantity. Take application A as an example (application A can represent any one of the applications in the preset application set), a decision tree is built for application A based on the ID3 algorithm. All samples of the application A are extracted from a database and are initialized to a training data set Y. A building algorithm is described as follows.

Action (1), an initial input sample space is initialized as all extracted samples of application A.

Action (2), a feature with a greatest information gain to a classification result is selected to be a current node classification feature.

For the samples corresponding to a current node (when first executed, the current node is the root node, and the corresponding samples are all of the extracted samples), the probability distribution of the sample is calculated as follows.

$p_1$ =the number of positive samples/the number of total samples, and $p_2$ =the number of negative samples/the number of total samples, where the positive samples refers to the samples having a sample label "1", and the negative samples refers to the samples having a sample label "0".

An empirical entropy of the samples is calculated as follow.

$$H(Y) = -\sum_{i=1}^{2} p_i \log p_i$$

A conditional entropy of the classification result of each of features X listed in action (1) to the sample Y is calculated as follow.

$$H(Y \mid X) = \sum_{i=1}^{n} p_i H(Y \mid X = x_i)$$

where n is the total number of the value of the features X. For feature $x_i$, if the feature $x_i$ indicates the switching state of a mobile data network, then the value includes two values representing "on" and "off", and n is 2. If the feature $x_i$ indicates the previous foreground application, the value of n may be a total number of all applications installed in the terminal device.

An information gain of each feature to the classification of the samples is calculated as follows after the conditional entropy of each feature is calculated.

$$g(Y, X) = H(Y) - H(Y \mid X)$$

The information gains of all features are compared, and a feature with the largest information gain is selected as a target feature.

Action (3), whether the information gain corresponding to the selected target feature is greater than or equal to a preset gain threshold $\varepsilon$ is determined. If yes, the target feature is selected as a dividing feature of the current node, and the sample is divided into multiple spaces according to a distribution of the value of the target feature. The multiple spaces are assigned, by combining the remaining features, to each child node, and the above action (2) is sequentially called for each child node. If a certain child node only contains one type of samples, the child node is taken as a leaf node, and its probability output is 1 (all the samples are positive samples) or 0 (all the samples are negative samples). If the information gain of the target feature is less than the preset gain threshold $\varepsilon$, the current node is taken as a leaf node, and the value (obtained by the number of the positive samples/the number of the total samples) in the node is taken as the probability value of a positive result of the output of the node.

It can be understood that, when the above action (2) is called again, the current node is a child node of the previous node, and correspondingly, the number of the positive samples, the number of the negative samples, and the number of the total samples are all re-determined, which correspond to the current child node.

Through the operations of the above actions (1), (2), and (3), the features that having maximum information gain to the result classification is repeatedly selected as segmentation points, until all samples of the leaf node belong to the same class, or the information gain is less than the preset gain threshold, or all the features are traversed, and finally the decision tree prediction model corresponding to the application A is built.

At block 203, a probability value output from a leaf node that matches the current state feature information is acquired in each decision tree prediction model.

In each decision tree, only one leaf node matches the current state feature information, and at the only one leaf node, a corresponding output probability value is obtained.

At block 204, an application corresponding to the decision tree prediction model outputting a greatest probability value is determined as a target application.

At block 205, the target application is preloaded.

According to the method for preloading the application provided in the embodiment of the disclosure, the current state feature information of the terminal device is respectively input into the decision tree prediction models each corresponding to an application in the preset application set and built based on the ID3 algorithm. The application that is most likely to be initiated immediately is determined according to the probability values output from the models, and then the determined application is preloaded, in order to accurately predict the application to be initiated, and to increase the initiation speed of the application while saving storage space.

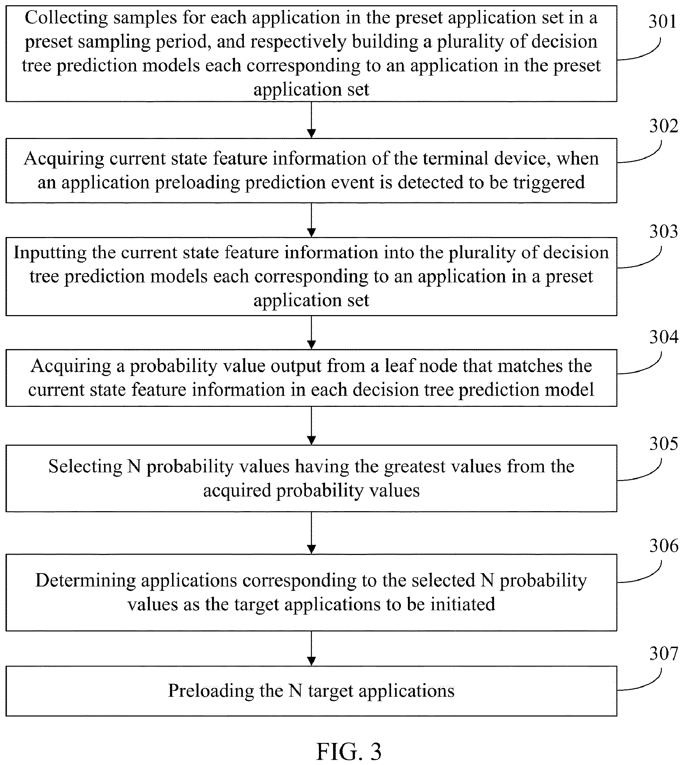

FIG. 3 is a schematic flowchart of another method for preloading an application according to an embodiment of the disclosure. The building of the decision tree prediction models is performed by the terminal device. The method begins at block 301.

At block 301, samples for each application in the preset application set are collected in a preset sampling period, and a plurality of decision tree prediction models each corresponding to an application in the preset application set are respectively built.

As an implement, for each application in the preset application set, real-time state feature information of the terminal device at a sampling time point is acquired during the preset sampling period, and the real-time state feature information is taken as a sample of a current application. Whether the current application being used within a predetermined time period after the sampling time point is monitored. A monitoring result is recorded as a sample label of the current sample, and the decision tree prediction model corresponding to the current application is built according to the samples collected in the preset sampling period and the corresponding sample labels.

At block 302, current state feature information of the terminal device is acquired, when an application preloading prediction event is detected to be triggered.

In an exemplary embodiment, the state feature information may include at least one of time information, a date category, a switching state of a mobile data network, a connection state of a wireless hotspot, identity information of a connected wireless hotspot, currently running applications, a previous foreground application, a duration of a current application staying in the background, a time point at which the current application was last switched to the background, plugging and unplugging states of an earphone jack, a charging state, power information of a battery, a display duration of a screen, motion state and location information of the terminal device.

At block 303, the current state feature information is input into the plurality of decision tree prediction models each corresponding to an application in a preset application set.

At block 304, a probability value output from a leaf node that matches the current state feature information is acquired in each decision tree prediction model.

At block 305, N probability values having the greatest values are selected from the acquired probability values.

In the embodiment, the method may further include the following. Storage space information of the terminal device is acquired, and the value of N is determined according to the storage space information.

In an exemplary embodiment, the storage space information may be a remaining memory state. The performance of the terminal device can be tested when different numbers of applications are loaded in different remaining memory states by simulation or experiment, thereby determining the value of N corresponding to different storage space information, and a corresponding relationship is stored in the terminal device.

In addition, for different applications, the resources to be preloaded may occupy storage space of different sizes. The total amount of storage space to be occupied by the resources to be preloaded may be determined according to the current storage space information. The applications in the preset application set are sorted according to the probability values output by the corresponding decision tree prediction models in a descending order. A total number of the applications that can be preloaded is determined according to amounts of the storage space occupied by the resources to be preloaded of the top-ranked applications and the total amount of remaining storage space, and the total number is determined as the value of N.

At block 306, applications corresponding to the selected N probability values are determined as the target applications to be initiated

At block 307, the N target applications are preloaded.

According to the method for preloading the application provided in the embodiment of the disclosure, each of the samples contains features of multiple dimensions to fully reflect the user's usage habits. The current state feature information of the terminal device is respectively input into the decision tree prediction models each corresponding to an application in the preset application set and built based on the ID3 algorithm. According to the probability values output by the models and the current storage space information of the terminal device, it is possible to quickly and accurately predict one or more applications that the users may use immediately. By preloading the predicted one or more applications in advance, the hit rate of the predicted results can be increased, thereby effectively increasing the initiation speed of the applications.

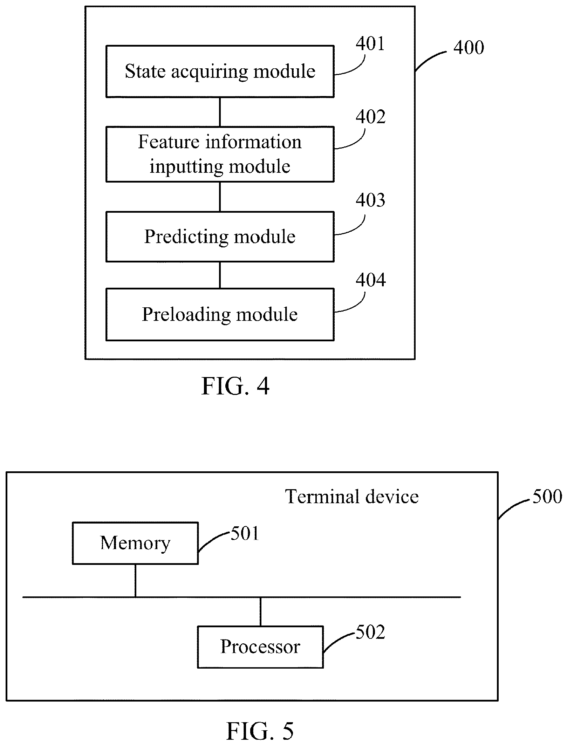

FIG. 4 is a structural block diagram illustrating an apparatus for preloading an application according to an embodiment of the disclosure. The apparatus may be implemented by software and/or hardware and can be generally integrated in a terminal device. The terminal device may preload an application to be initiated by executing the above method for preloading the application. As illustrated in FIG. 4, the apparatus 400 includes a state acquiring module 401, a feature information inputting module 402, a predicting module 403, and a preloading module 404. In an embodiment, the functions of the state acquiring module 401, the feature information inputting module 402, the predicting module 403, and the preloading module 404 may be implemented through a processor.

The state acquiring module 401 is configured to acquire current state feature information of the terminal device, when an application preloading prediction event is detected to be triggered.

The feature information inputting module 402 is configured to input the current state feature information into a plurality of decision tree prediction models each corresponding to an application in a preset application set, where each of the decision tree prediction models is generated based on a usage regularity of an associated application corresponding to historical state feature information of the terminal device.

The predicting module 403 is configured to predict a target application to be initiated, according to output results of the decision tree prediction models.

The preloading module 404 is configured to preload the target application.

According to the apparatus for preloading the application provided in the embodiment of the disclosure, the current state feature information of the terminal device is acquired, when an application preloading prediction event is detected to be triggered. The current state feature information is respectively input into a plurality of decision tree prediction models each corresponding to an application in a preset application set. Each of the decision tree prediction models is generated based on the usage regularity of an associated applications corresponding to the historical state feature information of the terminal device. A target application to be initiated is predicted according to the output results of the decision tree prediction models, and then the target application is preloaded. By adopting the above technical solution, the terminal device can predict the application to be initiated according to the current usage state of the terminal device and the decision tree prediction models, where the decision tree prediction models are generated based on the states recorded during historical usage and the usage regularities of the associated applications, and then the application predicted is preloaded. In this way, the application to be initiated can be accurately predicted, and the initiation speed of the application can be improved under a precondition of saving storage space.

As an implementation, the apparatus 400 further includes a sample collecting module, which is configured to collect samples for each application in the preset application set in a preset sampling period before the application preloading prediction event is detected to be triggered, and to respectively build a plurality of decision tree prediction models each corresponding to an application in the preset application set.

Further, the action of collecting samples for each application in the preset application set in a preset sampling period, and respectively building the plurality of decision tree prediction models each corresponding to an application in the preset application set, includes the follows. For each application in the preset application set, real-time state feature information of the terminal device is acquired at a sampling time point in the preset sampling period, and the real-time state feature information is taken as a sample of a current application. Whether the current application is used within a predetermined time period after the sampling time point is monitored, and a monitoring result is recorded as a sample label of the current sample. The decision tree prediction model corresponding to the current application is built according to the samples collected in the preset sampling period and the corresponding sample labels.

As an implementation, the action of building the decision tree prediction model corresponding to the current application according to the samples collected in the preset sampling period and the corresponding sample labels, includes the follows. The decision tree prediction model is built based on the ID3 algorithm corresponding to the current application, according to the samples collected in the preset sampling period and the corresponding sample labels.

As an implementation, the action of predicting a target application to be initiated according to output results of the decision tree prediction models, includes the follow. A probability value output from a leaf node that matches the current state feature information in each decision tree prediction model is acquired. N probability values having the greatest values are selected from the acquired probability values, where N is a positive integer greater than or equal to one. Applications corresponding to the selected N probability values are determined as the target applications to be initiated.

As an implementation, storage space information of the terminal device is acquired, and the value of N is determined according to storage space information of the terminal device.

As an implementation, the state feature information includes at least one of time information, a date category, a switching state of a mobile data network, a connection state of a wireless hotspot, identity information of a connected wireless hotspot, currently running applications, a previous foreground application, a duration of a current application staying in the background, a time point at which the current application was last switched to the background, plugging and unplugging states of an earphone jack, a charging state, power information of a battery, a display duration of a screen, motion state and location information of the terminal device.

Embodiments of the disclosure further provide a non-transitory computer readable storage medium, on which computer programs are stored. The computer programs are executed by a processor to carry out the following actions. Current state feature information of the terminal device is acquired, when an application preloading prediction event is detected to be triggered. The current state feature information is input into a plurality of decision tree prediction models each corresponding to an application in a preset application set, where each of the decision tree prediction models is generated based on a usage regularity of an associated application corresponding to historical state feature information of the terminal device. A target application to be initiated is predicted according to output results of the decision tree prediction models, and then the target application is preloaded.

The storage medium refers to any of various types of memory devices or storage devices. The term "storage medium" is intended to include: a mounting medium such as a compact disc read-only memory (CD-ROM), a floppy disk, or a tape device; a computer system memory or a random access memory such as a dynamic random access memory (DRAM), a display data random access memory (DDRRAM), a static random access memory (SRAM), an extended data output random access memory (EDORAM) and a Rambus random access memory (Rambus RAM); a non-transitory memory such as a flash memory and a magnetic medium (such as a hard disk or an optical memory); a register and other similar types of memory element, and the like. The storage medium may also include other types of memory or a combination thereof. In addition, the storage medium may be located in a first computer system in which a program is executed, or may be located in a different second computer system which is coupled to the first computer system via a network, such as the Internet. The second computer system can provide program instructions to the first computer for execution. The term "storage medium" can include two or more storage media that may reside in different locations (e.g. different computer systems connected through a network). The storage medium may store program instructions (e.g., computer programs) executable by one or more processors.

In the embodiments of the disclosure, the computer executable instructions contained in the storage medium are not limited to executing the operations of preloading the application as described above, and can also execute relevant operations of the method for preloading the application according to any of the embodiments of the disclosure.

Embodiments of the disclosure provide a terminal device. The apparatus for preloading the application of the embodiments of the disclosure can be integrated into the terminal device. FIG. 5 is a schematic structural diagram illustrating a terminal device 500 according to an embodiment of the disclosure. The terminal device 500 includes a memory 501, a processor 502, and computer programs stored in the memory 501 and executed by the processor 502. The processor 502 is configured to execute the computer programs to implement the method for preloading the application of the embodiments of the disclosure.

According to the terminal device provided in the embodiment of the disclosure, the application to be initiated can be predicted according to the current usage state of the terminal device and the decision tree prediction models, where the decision tree prediction models are generated based on the states recorded during historical usage and the usage regularities of the associated applications, and then the predicted application is preloaded, in order to improve the accuracy of predicting the application to be initiated, and to increase the initiation speed of the application while saving storage space.

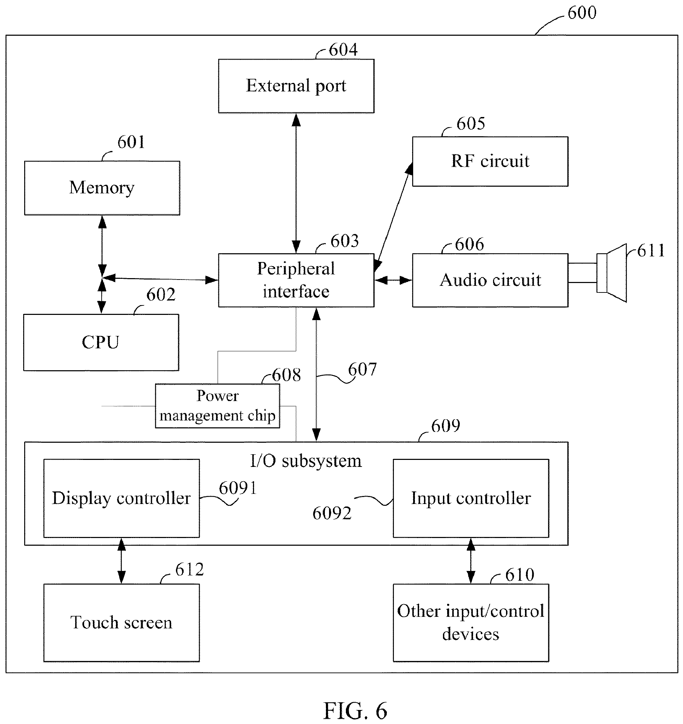

FIG. 6 is a schematic structural diagram illustrating another terminal device according to an embodiment of the disclosure. As illustrated in FIG. 6, the terminal device includes a housing (not illustrated), a memory 601, and a central processing unit (CPU) 602 (also referred to as a processor, hereinafter CPU for short), a circuit board (not illustrated), and a power supply circuit (not illustrated). The circuit board is disposed inside a space defined by the housing. The CPU 602 and the memory 601 are disposed on the circuit board. The power supply circuit is configured to supply power for each circuit or component of the terminal device. The memory 601 is configured to store executable program codes. The CPU 602 is configured to run a computer program corresponding to the executable program codes by reading the executable program codes stored in the memory 601 to carry out the following actions.

Current state feature information of the terminal device is acquired, when an application preloading prediction event is detected to be triggered. The current state feature information is input into a plurality of decision tree prediction models each corresponding to an application in a preset application set, where each of the decision tree prediction models is generated based on a usage regularity of an associated application corresponding to historical state feature information of the terminal device. A target application to be initiated is predicted according to output results of the decision tree prediction models, and then the target application is preloaded.

The terminal device further includes a peripheral interface 603, an radio frequency (RF) circuit 605, an audio circuit 606, a speaker 611, a power management chip 608, an input/output (I/O) subsystem 609, other input/control devices 610, a touch screen 612, and an external port 604, which are communicated via one or more communication buses or signal lines 607.

It should be understood that, the terminal device 600 illustrated is only an exemplary, and the terminal 600 may have more or fewer components than those illustrated in FIG. 6. For example, two or more components may be combined, or different component configurations can be adopted in the terminal device. The various components illustrated in FIG. 6 can be implemented in hardware, software, or a combination of hardware and software including one or more signal processing and/or application specific integrated circuits.

The following describes a mobile phone as an example of the terminal device for preloading an application.

The memory 601 is accessible by the CPU 602, the peripheral interface 603 and so on. The memory 601 may include a high-speed random access memory and may further include a non-transitory memory such as one or more magnetic disk storage devices, flash memory devices, or other transitory solid-state memory devices.

The peripheral interface 603 is configured to connect the input and output peripherals of the device to the CPU 602 and the memory 601.

The I/O subsystem 609 is configured to connect the input and the output peripherals such as the touch screen 612 and other input/control devices 610 to the peripheral interface 603. The I/O subsystem 609 may include a display controller 6091 and one or more input controllers 6092 configured to control other input/control devices 610. The one or more input controllers 6092 are configured to receive electrical signals from or send electrical signals to other input/control devices 610, where other input/control devices 610 may include a physical button (a press button, a rocker button, etc.), a dial, a slide switch, a joystick, or a click wheel. It should be noted that the input controller 6092 can be coupled with any of a keyboard, an infrared port, a universal serial bus (USB) interface, and a pointing apparatus such as a mouse.

The touch screen 612 functions as an input interface and an output interface between a terminal and a user, and is configured to display a visual output to the user. The visual output may include graphics, text, icons, videos, and the like.

The display controller 6091 in the I/O subsystem 609 is configured to receive an electrical signal from or send an electrical signal to the touch screen 612. The touch screen 612 is configured to detect contact or touch on the touch screen. The display controller 6091 is configured to convert the contact detected into an interaction with a user interface object displayed on the touch screen 612, that is, to realize human-computer interaction. The user interface object displayed on the touch screen 612 may be an icon of a running game, an icon indicating connection to corresponding networks, and the like. It should be noted that, the device may also include a light mouse, which is a touch sensitive surface that does not display a visual output, or can be an extension of a touch sensitive surface formed by the touch screen.

The RF circuit 605 is configured to establish communication between a mobile phone and the wireless network (i.e. network side) and to transmit and receive data between the mobile phone and the wireless network, for example, transmit and receive short messages, emails, and the like. The RF circuit 605 is configured to receive and transmit RF signals (also known as electromagnetic signals), to convert an electrical signal into an electromagnetic signal or convert an electromagnetic signal into an electrical signal, and to communicate with a communication network and other devices through electromagnetic signals. The RF circuit 605 may include known circuits for performing these functions, including but not limited to an antenna system, an RF transceiver, one or more amplifiers, a tuner, one or more oscillators, a digital signal processor, a coder-decoder (CODEC) chipset, a subscriber identity module (SIM), and so on.

The audio circuit 606 is configured to receive audio data from the peripheral interface 603, to convert the audio data into an electric signal, and to transmit the electric signal to the speaker 611.

The speaker 611 is configured to restore the voice signal received by the mobile phone from the wireless network via the RF circuit 605 to sound and to play the sound to the user.

The power management chip 608 is configured for power supply and power management of the hardware connected to the CPU 602, the I/O subsystem 609, and the peripheral interface 603.

The apparatus for preloading the application, the storage medium, and the terminal device provided in the above embodiments have corresponding functional modules to execute the corresponding method for preloading the application, and thus each contributes to advantageous effects of executing the method. For technical details not described herein, reference may be made to the description of the method for preloading the application

**Claims**

1. A method for preloading an application, being applied to a terminal device, the method comprising:

   acquiring current state feature information of the terminal device, when an application preloading prediction event is detected to be triggered (101);
   inputting the current state feature information into a plurality of decision tree prediction models each corresponding to an application in a preset application set (102), to cause each of the decision tree prediction models to output a probability value; wherein for each decision tree prediction model, the decision tree prediction model is caused to output a probability value indicating a probability that its corresponding application becomes a next application used by a user; the decision tree prediction model is generated based on a usage regularity of its corresponding application, wherein the usage regularity corresponds to historical state feature information of the terminal device;
   acquiring the probability values output by the plurality of decision tree prediction models, comprising:
   acquiring a probability value output from a leaf node that matches the current state feature information in each decision tree prediction model (304);
   predicting target applications to be initiated according to the probability values output by the decision tree prediction models (103), comprising:

      selecting N probability values having the greatest values from the plurality of probability values (305), wherein N is a positive integer greater than or equal to one; and determining applications corresponding to the selected N probability values as the target applications to be initiated (306); and

   preloading the target applications (104).

2. The method of claim 1, further comprising:
   collecting samples for each application in the preset application set in a preset sampling period, and respectively building the plurality of decision tree prediction models each corresponding to an application in the preset application set (301).

3. The method of claim 2, wherein the collecting samples for each application in the preset application set in a preset sampling period, and respectively building the plurality of decision tree prediction models each corresponding to an application in the preset application set, comprises:

acquiring, for each application in the preset application set, real-time state feature information of the terminal device at a sampling time point in the preset sampling period, and taking the real-time state feature information as a sample of a current application;

monitoring whether the current application is used within a predetermined time period after the sampling time point, and recording a monitoring result as a sample label of the current sample; and

building the decision tree prediction model corresponding to the current application according to the samples collected in the preset sampling period and the corresponding sample labels.

4. The method of claim 3, wherein the decision tree prediction model is built based on one of the following algorithms: ID3 algorithm, CART algorithm, C4.5 algorithm, and Random Forest.

5. The method of claim 1, further comprising:
acquiring storage space information of the terminal device, and determining the value of N according to the storage space information.

6. The method of claim 5, wherein the acquiring storage space information of the terminal device, and determining the value of N according to the storage space information, comprises:

acquiring storage space information of the terminal device;

determining, according to the acquired storage space information, a total amount of remaining storage space that can be provided for the resources to be preloaded of the applications in the preset application set;

sorting the applications in the preset application set according to the probability values output from the corresponding decision tree prediction models in a descending order;

acquiring the amounts of the storage space occupied by the resources to be preloaded of the applications in the preset application set;

determining a total number of the applications that can be preloaded according to amounts of the storage space occupied by the resources to be preloaded of the top-ranked applications and the total amount of remaining storage space, wherein the total number is determined as the value of N.

7. The method of claim 1, wherein acquiring the probability values output by the plurality of decision tree prediction models comprises:

acquiring a probability value output from a leaf node that matches the current state feature information in each decision tree prediction model (203);

wherein predicting the target application to be initiated according to the probability values of the decision tree prediction models comprises: determining an application corresponding to the decision tree prediction model outputting a greatest probability value as a target application (204).

8. The method of claim 3, wherein the state feature information comprises at least one of time information, a date category, a switching state of a mobile data network, a connection state of a wireless hotspot, identity information of a connected wireless hotspot, currently running applications, a previous foreground application, a duration of a current application staying in the background, a time point at which the current application was last switched to the background, plugging and unplugging states of an earphone jack, a charging state, power information of a battery, a display duration of a screen, motion state and location information of the terminal device.

9. The method of claim 1, wherein the preset application set comprises all or part of applications installed in the terminal device.

10. The method of claim 9, wherein the preset application set is determined according to at least one of usage count and usage duration of each application in a predetermined time period.

11. A non-transitory computer-readable storage medium storing computer programs which, when executed by a processor (502), cause the processor (502) to perform the method of any one of claims 1 to 10.

12. A terminal device (500), comprising:

at least one processor (502); and
a computer readable storage, coupled to the at least one processor (502) and storing at least one computer executable instruction thereon, which when executed by the at least one processor (502), cause the at least one processor (502) to perform the method of any one of claims 1 to 10.

**Patentansprüche**

1. Verfahren zum Vorladen einer Anwendung, die in einer Endgerätvorrichtung angewendet wird, wobei das Verfahren Folgendes umfasst:

Erfassen aktueller Zustandsmerkmalsinformationen der Endgerätvorrichtung, wenn detektiert wird, dass ein Anwendungsvorlade-Vorhersageereignis auszulösen ist, (101);

Eingeben der aktuellen Zustandsmerkmalsinformationen in mehrere Entscheidungsbaum-Vorhersagemodelle, wobei jedes einer Anwendung in einer vorgegebenen Anwendungsmenge entspricht, (102), um jedes der Entscheidungsbaum-Vorhersagemodelle zu veranlassen, einen Wahrscheinlichkeitswert auszugeben; wobei für jedes Entscheidungsbaum-Vorhersagemodell das Entscheidungsbaum-Vorhersagemodell veranlasst wird, einen Wahrscheinlichkeitswert auszugeben, der eine Wahrscheinlichkeit angibt, dass seine entsprechende Anwendung eine nächste Anwendung wird, die durch einen Anwender verwendet wird; wobei das Entscheidungsbaum-Vorhersagemodell basierend auf einer Verwendungsregelmäßigkeit seiner entsprechenden Anwendung erzeugt wird, wobei die Verwendungsregelmäßigkeit historischen Zustandsmerkmalsinformationen der Endgerätvorrichtung entspricht;

Erfassen der durch die mehreren Entscheidungsbaum-Vorhersagemodelle ausgegebenen Wahrscheinlichkeitswerte, das Folgendes umfasst:

Erfassen eines von einem Blattknoten ausgegebenen Wahrscheinlichkeitswerts, der den aktuellen Zustandsmerkmalsinformationen in jedem Entscheidungsbaum-Vorhersagemodell entspricht (304);

Vorhersagen von einzuleitenden Zielanwendungen gemäß den durch die Entscheidungsbaum-Vorhersagemodelle ausgegebenen Wahrscheinlichkeitswerten, (103), das Folgendes umfasst:

Auswählen von N Wahrscheinlichkeitswerten, die die größten Werte aufweisen, aus den mehreren Wahrscheinlichkeitswerten, (305), wobei N eine positive ganze Zahl größer als oder gleich eins ist; und

Bestimmen von Anwendungen, die den ausgewählten N Wahrscheinlichkeitswerten entsprechen, als die einzuleitenden Zielanwendungen, (306); und Vorladen der Zielanwendungen (104).

2. Verfahren nach Anspruch 1, das ferner Folgendes umfasst:

Sammeln von Abtastwerten für jede Anwendung in der vorgegebenen Anwendungsmenge in einer vorgegebenen Abtastperiode und jeweils Errichten der mehreren Entscheidungsbaum-Vorhersagemodelle, wobei jedes einer Anwendung in der vorgegebenen Anwendungsmenge entspricht, (301) .

3. Verfahren nach Anspruch 2, wobei das Sammeln von Abtastwerten für jede Anwendung in der vorgegebenen Anwendungsmenge in einer vorgegebenen Abtastperiode und das jeweilige Errichten der mehreren Entscheidungsbaum-Vorhersagemodelle, wobei jedes einer Anwendung in der vorgegebenen Anwendungsmenge entspricht, Folgendes umfasst:

Erfassen für jede Anwendung in der vorgegebenen Anwendungsmenge von Echtzeit-Zustandsmerkmalsinformationen der Endgerätvorrichtung zu einem Abtastzeitpunkt in der vorgegebenen Abtastperiode und Nehmen der Echtzeit-Zustandsmerkmalsinformationen als einen Abtastwert einer aktuellen Anwendung;

Überwachen, ob die aktuelle Anwendung innerhalb eines vorgegebenen Zeitraums nach dem Abtastzeitpunkt verwendet wird, und Aufzeichnen eines Überwachungsergebnisses als ein Abtastwertetikett des aktuellen Abtastwerts; und

Errichten des Entscheidungsbaum-Vorhersagemodells, das der aktuellen Anwendung entspricht, gemäß den in der vorgegebenen Abtastperiode gesammelten Abtastwerten und den entsprechenden Abtastwertetiketten.

4. Verfahren nach Anspruch 3, wobei das Entscheidungsbaum-Vorhersagemodell basierend auf einem der folgenden Algorithmen errichtet wird: einem ID3-Algorithmus, einem CART-Algorithmus, einem C4.5-Algorithmus und einem Zufallswald.

5. Verfahren nach Anspruch 1, das ferner Folgendes umfasst:

Erfassen von Speicherrauminformationen der Endgerätvorrichtung und Bestimmen des Wertes von N gemäß den Speicherrauminformationen.

6. Verfahren nach Anspruch 5, wobei das Erfassen der Speicherrauminformationen der Endgerätvorrichtung und das Bestimmen des Wertes von N gemäß den Speicherrauminformationen Folgendes umfasst:

Erfassen der Speicherrauminformationen der Endgerätvorrichtung;

Bestimmen gemäß den erfassten Speicherrauminformationen einer Gesamtmenge des verbleibenden Speicherraums, der für die vorzuladenden Betriebsmittel der Anwendungen in der vorgegebenen Anwendungsmenge bereitgestellt werden kann;

Sortieren der Anwendungen in der vorgegebenen Anwendungsmenge gemäß den von den entsprechenden Entscheidungsbaum-Vorhersagemodellen ausgegebenen Wahrscheinlichkeitswerten in einer absteigenden Reihenfolge; Erfassen der Mengen des Speicherraums, die durch die vorzuladenden Betriebsmittel der Anwendungen in der vorgegebenen Anwendungsmenge belegt sind; Bestimmen einer Gesamtzahl der Anwendungen, die vorgeladen werden können, gemäß den Mengen des Speicherraums, der durch die vorzuladenden Betriebsmittel der am höchsten eingestuften Anwendungen belegt wird, und der Gesamtmenge des verbleibenden Speicherraums, wobei die Gesamtzahl als der Wert von N bestimmt wird.

7. Verfahren nach Anspruch 1, wobei das Erfassen der durch die mehreren Entscheidungsbaum-Vorhersagemodelle ausgegebenen Wahrscheinlichkeitswerte Folgendes umfasst:

Erfassen eines von einem Blattknoten, der den aktuellen Zustandsmerkmalsinformationen in jedem Entscheidungsbaum-Vorhersagemodell entspricht, ausgegebenen Wahrscheinlichkeitswerts, (203); wobei das Vorhersagen der einzuleitenden Zielanwendung gemäß den Wahrscheinlichkeitswerten der Entscheidungsbaum-Vorhersagemodelle Folgendes umfasst: Bestimmen einer Anwendung, die dem Entscheidungsbaum-Vorhersagemodell entspricht, das einen größten Wahrscheinlichkeitswert ausgibt, als eine Zielanwendung, (204).

8. Verfahren nach Anspruch 3, wobei die Zustandsmerkmalsinformationen wenigstens eines des Folgenden umfassen: Zeitinformationen, eine Datumskategorie, einen Schaltzustand eines mobilen Datennetzes, einen Verbindungszustand eines drahtlosen Hotspots, Identitätsinformationen eines verbundenen drahtlosen Hotspots, gegenwärtig ausgeführte Anwendungen, eine vorhergehende Vordergrundanwendung, eine Dauer einer aktuellen Anwendung, die im Hintergrund bleibt, einen Zeitpunkt, zu dem die aktuelle Anwendung zuletzt in den Hintergrund geschaltet wurde, die Einsteck- und Aussteckzustände einer Kopfhörerbuchse, einen Ladezustand, Leistungsinformationen einer Batterie, eine Anzeigedauer eines Schirms, Bewegungszustands- und Ortsinformationen der Endgerätvorrichtung.

9. Verfahren nach Anspruch 1, wobei die vorgegebene Anwendungsmenge alle oder einen Teil der in der Endgerätvorrichtung installierten Anwendungen umfasst.

10. Verfahren nach Anspruch 9, wobei die vorgegebene Anwendungsmenge gemäß wenigstens einer einer Verwendungszählung und einer Verwendungsdauer jeder Anwendung in einem vorgegebenen Zeitraum bestimmt wird.

11. Nicht transitorisches computerlesbares Speichermedium, das Computerprogramme speichert, die dann, wenn sie durch einen Prozessor (502) ausgeführt werden, den Prozessor (502) veranlassen, das Verfahren nach einem der Ansprüche 1 bis 10 auszuführen.

12. Endgerätvorrichtung (500), die Folgendes umfasst:

wenigstens einen Prozessor (502); und einen computerlesbaren Speicher, der an den wenigstens einen Prozessor (502) gekoppelt ist und darin wenigstens eine computerausführbare Anweisung speichert, die dann, wenn sie durch den wenigstens einen Prozessor (502) ausgeführt wird, den wenigstens einen Prozessor (502) veranlasst, das Verfahren nach einem der Ansprüche 1 bis 10 auszuführen.

**Revendications**

1. Procédé de préchargement d'une application, appliqué à un dispositif terminal, le procédé comprenant :

l'acquisition d'informations de caractéristiques d'état actuelles du dispositif terminal lorsqu'il est détecté qu'un événement de prédiction de préchargement d'application doit être déclenché (101) ; l'entrée des informations de caractéristiques d'état actuelles dans une pluralité de modèles de prédiction d'arbre de décision correspondant chacun à une application dans un ensemble d'applications prédéfini (102), pour amener chacun des modèles de prédiction d'arbre de décision à délivrer une valeur de probabilité ; dans lequel pour chaque modèle de prédiction d'arbre de décision, le modèle de prédiction d'arbre de décision est amené à délivrer une valeur de probabilité indiquant une probabilité que son application correspondante devient une application suivante utilisée par un utilisateur ; le modèle de prédiction d'arbre de décision est généré en fonction d'une régularité d'utilisation de son application correspondante, la régularité d'utilisation correspondant à des informations de caractéristiques d'état historiques du dispositif terminal ; l'acquisition des valeurs de probabilité délivrées par la pluralité de modèles de prédiction d'arbre de décision, comprenant : l'acquisition d'une valeur de probabilité délivrée par un nœud feuille qui correspond aux informations de caractéristiques d'état actuelles dans chaque modèle de prédiction d'arbre de décision (304) ;
la prédiction d'applications cibles à lancer en fonction des valeurs de probabilité délivrées par les modèles de prédiction d'arbre de décision (103), comprenant :

     la sélection de N valeurs de probabilité ayant les valeurs les plus élevées parmi la pluralité de valeurs de probabilité (305), N étant un entier positif supérieur ou égal à un ; et
la détermination d'applications correspondant aux N valeurs de probabilité sélectionnées en tant qu'applications cibles à lancer (306) ; et

     le préchargement des applications cibles (104).

2. Procédé selon la revendication 1, comprenant en outre :
la collecte d'échantillons pour chaque application dans l'ensemble d'applications prédéfini dans une période d'échantillonnage prédéfinie, et respectivement la construction de la pluralité de modèles de prédiction d'arbre de décision correspondant chacun à une application dans l'ensemble d'applications prédéfini (301) .

3. Procédé selon la revendication 2, dans lequel la collecte d'échantillons pour chaque application dans l'ensemble d'applications prédéfini dans une période d'échantillonnage prédéfinie, et respectivement la construction de la pluralité de modèles de prédiction d'arbre de décision correspondant chacun à une application dans l'ensemble d'applications prédéfini comprennent :

     l'acquisition, pour chaque application dans l'ensemble d'applications prédéfini, d'informations de caractéristiques d'état en temps réel du dispositif terminal à un instant d'échantillonnage dans la période d'échantillonnage prédéfinie, et l'utilisation des informations de caractéristiques d'état en temps réel comme échantillon d'une application actuelle ;
la surveillance que l'application actuelle est utilisée ou non dans une période de temps prédéterminée après l'instant d'échantillonnage, et l'enregistrement d'un résultat de surveillance en tant qu'étiquette d'échantillon de l'échantillon actuel ; et
la construction du modèle de prédiction d'arbre de décision correspondant à l'application actuelle en fonction des échantillons collectés dans la période d'échantillonnage prédéfinie et des étiquettes d'échantillons correspondantes.

4. Procédé selon la revendication 3, dans lequel le modèle de prédiction d'arbre de décision est construit selon l'un des algorithmes suivants : algorithme ID3, algorithme CART, algorithme C4.5 et Random Forest.

5. Procédé selon la revendication 1, comprenant en outre :
l'acquisition d'informations d'espace de mémorisation du dispositif terminal, et la détermination de la valeur de N en fonction des informations d'espace de mémorisation.

6. Procédé selon la revendication 5, dans lequel l'acquisition d'informations d'espace de mémorisation du dispositif terminal, et la détermination de la valeur de N en fonction des informations d'espace de mémorisation comprennent :

     l'acquisition d'informations d'espace de mémorisation du dispositif terminal ;
la détermination, en fonction des informations d'espace de mémorisation acquises, d'une quantité totale d'espace de mémorisation restant pouvant être fournie pour les ressources à précharger des applications dans l'ensemble d'applications prédéfini ;
le tri des applications dans l'ensemble d'applications prédéfini en fonction des valeurs de probabilité délivrées par les modèles de prédiction d'arbre de décision correspondants dans un ordre décroissant ;
l'acquisition des quantités de l'espace de mémorisation occupées par les ressources à précharger des applications dans l'ensemble d'applications prédéfini ;
la détermination d'un nombre total des applications pouvant être préchargées en fonction de quantités de l'espace de mémorisation occupées par les ressources à précharger des applications les mieux classées et de la quantité totale d'espace de mémorisation restant, dans lequel le nombre total est déterminé comme étant la valeur de N.

7. Procédé selon la revendication 1, dans lequel l'acquisition des valeurs de probabilité délivrées par la pluralité de modèles de prédiction d'arbre de décision comprend :

     l'acquisition d'une valeur de probabilité délivrée à partir d'un nœud feuille qui correspond aux informations de caractéristiques d'état actuelles dans chaque modèle de prédiction d'arbre de décision (203) ;
dans lequel la prédiction de l'application cible à lancer en fonction des valeurs de probabilité des modèles de prédiction d'arbre de décision comprend :

la détermination d'une application correspondant au modèle de prédiction d'arbre de décision qui délivre une valeur de probabilité la plus élevée en tant qu'application cible (204).

8. Procédé selon la revendication 3, dans lequel les informations de caractéristiques d'état comprennent au moins une information parmi des informations de temps, une catégorie de date, un état de commutation d'un réseau de données mobile, un état de connexion d'un point d'accès sans fil, des informations d'identité d'un point d'accès sans fil connecté, des applications en cours d'exécution, une application de premier plan antérieure, une durée d'une application en cours restant en arrière-plan, un instant auquel l'application actuelle a été basculée pour la dernière fois en arrière-plan, des états de branchement et de débranchement d'une prise écouteur, un état de charge, des informations de puissance d'une batterie, une durée d'affichage d'un écran, des informations d'état de mouvement et d'emplacement du dispositif terminal.

9. Procédé selon la revendication 1, dans lequel l'ensemble d'applications prédéfini comprend la totalité ou une partie d'applications installées dans le dispositif terminal.

10. Procédé selon la revendication 9, dans lequel l'ensemble d'applications prédéfini est déterminé en fonction au moins d'un compte d'utilisation et d'une durée d'utilisation de chaque application dans une période de temps prédéterminée.

11. Support de mémorisation non transitoire lisible par ordinateur mémorisant des programmes d'ordinateur qui, à leur exécution par un processeur (502), amènent le processeur (502) à réaliser le procédé selon l'une quelconque des revendications 1 à 10.

12. Dispositif terminal (500), comprenant :

au moins un processeur (502) ; et
une mémoire lisible par ordinateur, couplée à l'au moins un processeur (502) et mémorisant au moins une instruction exécutable par ordinateur qui, à son exécution par l'au moins un processeur (502), amène l'au moins un processeur (502) à réaliser le procédé selon l'une quelconque des revendications 1 à 10.

Acquiring current state feature information of the terminal device, when an application preloading prediction event is detected to be triggered — 101

Inputting the current state feature information into a plurality of decision tree prediction models each corresponding to an application in a preset application set — 102

Predicting a target application to be initiated according to output results of the decision tree prediction models — 103

Preloading the target application — 104

**FIG. 1**

Acquiring current state feature information of the terminal device, when an application preloading prediction event is detected to be triggered — 201

Inputting the current state feature information into a plurality of decision tree prediction models each corresponding to an application in a preset application set — 202

Acquiring a probability value output from a leaf node that matches the current state feature information in each decision tree prediction model — 203

Determining an application corresponding to the decision tree prediction model outputting a greatest probability value as a target application — 204

Preloading the target application — 205

**FIG. 2**

Collecting samples for each application in the preset application set in a preset sampling period, and respectively building a plurality of decision tree prediction models each corresponding to an application in the preset application set    301

Acquiring current state feature information of the terminal device, when an application preloading prediction event is detected to be triggered    302

Inputting the current state feature information into the plurality of decision tree prediction models each corresponding to an application in a preset application set    303

Acquiring a probability value output from a leaf node that matches the current state feature information in each decision tree prediction model    304

Selecting N probability values having the greatest values from the acquired probability values    305

Determining applications corresponding to the selected N probability values as the target applications to be initiated    306

Preloading the N target applications    307

FIG. 3

FIG. 4

FIG. 5

600

604

External port

605

RF circuit

601

Memory

603

Peripheral
interface

606

Audio circuit

611

602

CPU

608

Power
management chip

607

609

I/O subsystem

Display controller

6091

6092

Input controller

612

Touch screen

610

Other input/control
devices

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013173513 A1